# EUROPEAN PATENT SPECIFICATION

(11) **EP 0 357 413 B1**
(45) Date of publication and mention of the grant of the patent: **23.10.1996**
(21) Application number: 89308803.9
(22) Date of filing: 31.08.1989
(51) Int. Cl.: G06F 13/42

(54) **Data transfer control circuit**
Datenübertragungssteuerungsschaltung
Circuit de commande de transmission de données

(30) Priority: 02.09.1988 JP 220944/88
(43) Date of publication of application: 07.03.1990
(73) Proprietor: MATSUSHITA ELECTRIC INDUSTRIAL CO., LTD., Kadoma-shi, Osaka-fu, 571 (JP)
(72) Inventor: Ichinose, Makoto, Sakai-shi (JP); Sato, Isao, Nayagawa-shi (JP); Fukushima, Yoshihisa, Osaka (JP); Kuroki, Yuzuru Soshieru Mikami 103, Sapporo-shi (JP); Takagi, Yuji, Kadoma-shi (JP)
(74) Representative: Smith, Norman Ian

(56) References cited:
- EP-A- 0 072 614
- WO-A-82/00373
- US-A- 3 689 872
- IBM TECHNICAL DISCLOSURE BULLETIN, vol. 30, no. 1, June 1987, pages 8-11, New York, US; "Adaptive synchronous data transfer"
- PATENT ABSTRACTS OF JAPAN, vol. 11, no. 342 (P-635)(2789), 10 November 1987; & JP-A-62 125 458
- PATENT ABSTRACTS OF JAPAN, vol. 4, no. 142 (P-30)(624), 7 October 1980; JP-A-55 92 938
- PATENT ABSTRACTS OF JAPAN, vol. 10, no. 308 (P-508)(2364), 21 October 1986; JP-A-61 121 151
- EDN ELECTRICAL DESIGN NEWS, vol. 30, no. 2, 24 January 1985, pages 183-188, Newton, Massachusetts, US; J. LOHMEYER: "Use SCSI devices for multiprocessor, smart I/O systems"
- IBM TECHNICAL DISCLOSURE BULLETIN; vol. 12, no. 6, November 1969, pages 801-802, New York, US; D.K. HARDIN: "Clocked demand-response data transfer"

## Description

The present invention relates to a data transfer control circuit for effecting data transfer in such a manner as to enable a transfer request side to send out a data prior to an acknowledgement signal of a transfer aknowledgement side in a transfer control between the data request side and the data transfer acknowledgement side as in the synchronous transfer mode of SCSI.

### DESCRIPTION OF THE PRIOR ART

The SCSI instituted as a specification for a standard interface is an abbreviation of "Small Computer System Interface" compiled by ANSI (American National Standard Institute) in the form of a standard specification as ANSI X3.131-1986.

Every device connected to the bus of SCSI may become an initiator and/or a target. The initiator and the target are so related to each other that the initiator sends out a command to the target for execution by the latter of such operations as read and write. Basically, however, the target has a leading role in the control of data transfer. The target determines, for example, the "phase" for defining the contents of the transferred data of SCSI. The target also sends out a data transfer request signal (hereinafter called "the REQ signal") for requesting data transfer, which together with a data transfer acknowledgement signal (hereinafter called "the ACK signal") makes up signals for controlling the data transfer.

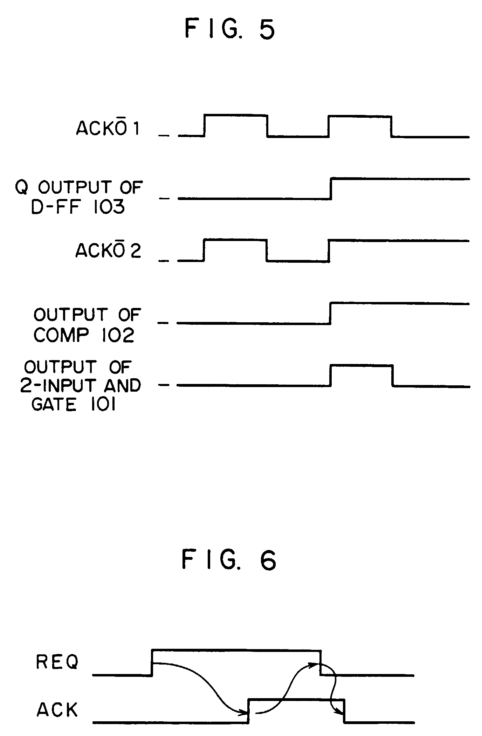

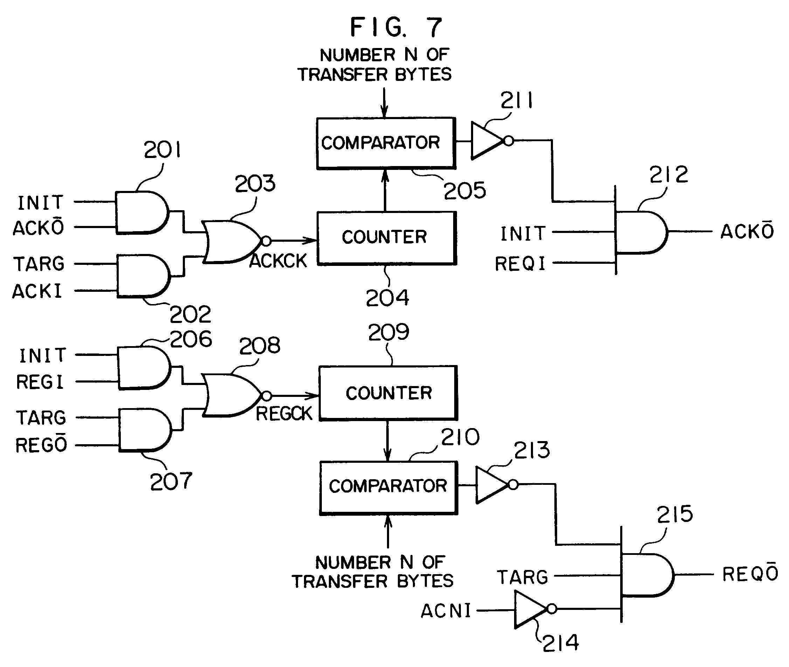

The SCSI standard in the initial stages of deliberation for establishment of the standard covered only the asynchronous made of data transfer controlled by the handshake between the REQ signal and the ACK signal. As shown in Fig. 6, the status change (rise and fall) of the REQ and ACK signals is confirmed mutually between the initiator and the target while controlling the transfer. A circuit for controlling the handshake between the REQ and ACK signals is shown, for example, in Fig. 7.

In Fig. 7, a signal INIT (Initiator) is one which becomes true only when the circuit is set to the initiator, and a signal TARG (Target) is one which becomes true only when the circuit is set to the target. Numeral 201 designates a two-input AND gate supplied with the signal INIT and the ACK output signal ACKO (Acknowledgement Output), and numeral 202 a two-input AND gate supplied with the signal TARG and the ACK input signal ACKI (Acknowledgement Input). Numeral 203 designates a two-input NOR gate supplied with outputs of the two-input AND gates 201 and 202. Numeral 204 designates a counter for counting pulses at the trailing edge of the output ACKCK (Acknowledgement Clock) of the two-input NOR gate 203, and numeral 205 a comparator for comparing an output of the counter 204 with a predetermined number N of transfer bytes, which comparator produces a true output when the two inputs become equal to each other. Numeral 206 designates a two-input AND gate supplied with the signal INIT and the REQ input signal REQI (Request Input), and numeral 207 a two-input AND gate supplied with the signal TARG and the REQ output signal REQO (Request Output). Numeral 208 designates a two-input NOR gate supplied with outputs of the two-input AND gates 206 and 207. Numeral 209 designates a counter for counting pulses at the trailing edge of the output REQCK (Request Clock) of the two-input NOR gate 208, and numeral 210 a comparator for comparing the output of the counter 209 with the predetermined number N of transfer bytes, which comparator produces a true output when the two inputs are equal to each other. Numeral 211 designates a reversing gate for reversing the output of the comparator 205, and numeral 212 a three-input AND gate supplied with the output of the reversing gate 211, the signal INIT and the REQ input signal REQI, which gates produces an ACK output signal ACKO with the circuit set to the initiator. Numeral 213 designates a reversing gate for reversing the output of the comparator 209, numeral 214 a reversing gate for reversing the ACK input signal ACKI, and numeral 215 a three-input AND gate supplied with the output of the reversing gate 213, the signal TARG and the output of the reversing gate 214, which three-input AND gate produces the REQ output signal REQO with the circuit set to the target.

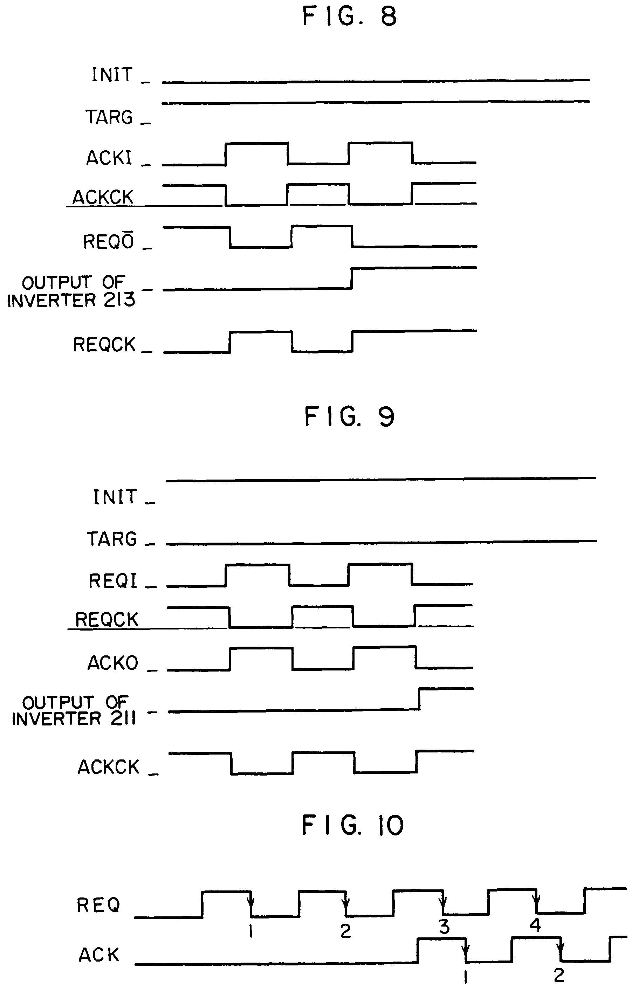

First, a case in which the circuit is set to the target will be explained with reference to the timing chart of Fig. 8. In this case, the signal INIT is false and the signal TARG true, the input ACKCK of the counter 204 is an inverted signal of the ACK input signal ACKI, and the input REQCK of the counter 209 is an inverted signal of the REQ output signal REQO. Since the signal INIT is false, the output ACKO of the three-input AND gate 212 is always false. The signal required to be controlled when the three-input AND gate is set to the target is the output REQO of the three-input AND gate 215. As long as the output of the counter 209 for counting the pulses at the trailing edge of the output of the signal REQK is smaller than the number N of transfer bytes, the output of the reversing gate 213 is true, and the signal TARG is true so that the signal REQO is an inverted signal of the signal ACKI. When the output of the counter 209 becomes equal to the number N of transfer bytes, the output of the reversing gate 213 becomes false, and therefore the REQO also becomes false.

Now, explanation will be made of the case in which the circuit is set to the initiator with reference to the timing chart of Fig. 9. In this case, the signal INIT is true and the signal TARG false, the input REQCK of the counter 209 is an inverted signal of the input REQ signal REQI, and the input ACKCK of the counter 204 is an inverted signal of the ACK output signal ACKO. Since the signal TARG is false, the output REQO of the three-input AND gate 215 remains always false. The signal required to be controlled when the circuit is set to the target is the output ACKO of the three-input AND gate 212. As long as the output of the counter 204 for counting the pulses at the trailing edge of the output of the signal ACKCK remains smaller than the number N of transfer bytes, the output of the reversing gate 211 is true, and also the signal INIT is true, so that the signal ACKO is an inverted signal of the signal REQI. When the output of the counter 204 becomes equal to the number N of transfer bytes, the output of the reversing gate 211 becomes false, and therefore ACKO becomes also false.

In this data transfer system of asynchronous mode, however, the transfer is controlled by detecting the level (true or false) of the REQ and ACK signals, and therefore, the propagation time equal to two reciprocations of the interface cable is required for 1-byte transfer control, resulting in the transfer speed of about 1.5 M bytes/second in maximum for the cable length of 6 m.

For this reason, a specification of data transfer of synchronous mode was added to the SCSI standard as an option to meet applications requiring a higher transfer speed. The data transfer of synchronous mode is a method for transfer control while confirming the REQ and ACK signals by the number of pulses as shown in Fig. 5. This method is considered usable only for the data-in phase and data-out phase in which the transfer quantity is likely to be greatest in all the transfer conditions (called "the phase" in SCSI) defined by SCSI.

In synchronous mode transfer, the REQ and ACK signals are transferred by pulse, and the normality of transfer is confirmed by the fact that the number of both pulses is equal to each other. If the number of offsets which is a predetermined parameter value is not exceeded, it is specified that the target may send out a REQ signal in advance of receiving the ACK signal which is an acknowledgement signal form the initiator.

Problems encountered in realizing the control of synchronous mode transfer of SCSI are centered on the two points mentioned below.
(1) There is available no clock (master clock) usable in common at the transmitting and receiving ends of data transfer. As a result, when the frequency of the clock for preparing an ACK signal is higher even slightly than that of the clock for preparing the REQ signal, the number of ACK signal pulses is liable to become more than that of REQ signal pulses while pulses are being sent out both by the target for preparing the REQ signal and by the initiator for preparing the ACK signal in the case where the quantity of data to be transferred is large. Also, it is necessary to control the value of offset without master clock in the synchronous mode transfer of SCSI.
(2) The SCSI standard provides that the REQ signal which is a starting signal of data transfer is generated on the side (called the target under SCSI) determining the phase (an SCSI term indicating the type of data transferred and the direction of data transfer). As a result, if the direction of data transfer is from target to initiator, the initiator may fail to receive the data transferred before the phase change is recognized and the data becomes ready to be received.

EP-A-0072614 describes a system having a receiving device coupled to receive data from a bus. The receiving device has a storage circuit for temporarily storing multiple words and a circuit for transmitting a response each time a word is read from the storage device. Transmission of words can be suspended whenever the number of words transmitted minus the number of response signals exceeds a given number.

IBM Technical Disclosure Bulletin Vol. 30 No. 1, June 1987, describes data transfer arrangement which eliminates handshake delays caused by propagation times.

### SUMMARY OF THE INVENTION

The object of the present invention is to realize the synchronous mode transfer of SCSI with a simple circuit.

In order to achieve the above-mentioned object, according to the present invention, there is provided a data transfer control circuit for controlling the data transfer based on a data transfer control specification capable of data transfer in such a manner as to enable a data transfer request signal to lead a data transfer acknowledgement signal bya predetermined number of words, said data transfer control circuit comprising means for generating a clock having a frequency equal to the data transfer speed, first counter means for counting the pulses of the data transfer request signal, and second counter means for counting the pulses of the data transfer acknowledgement signal, characterised by a full adder for adding the count output of the second counter means to the predetermined number of words by which the data transfer request signal is capable of leading the data transfer acknowledgement signal, and output comparator means for comparing the output of the full adder with the count output of the first counter means, the arrangement being such that when the output of the full adder is larger than the count output of the first counter means with the circuit set to the transmitting end of data transfer request signal, the output of the clock generator means is produced as a data transfer request signal, and when the output of the full adder becomes equal to the count output of the first counter means, the output of the clock generator means stops being produced as a data transfer request signal.

In an embodiment of the invention, the following operation is performed for data transfer in synchronous mode of SCSI:
(1) When the circuit is set to the initiator, the REQ input signal and ACK output signal are compared with each other in pulse count, so that when the pulse count of the REQ input signal is larger than that of the ACK output signal, the clock signal is produced as an ACK signal, and when the pulse count of the REQ input signal becomes equal to that of the ACK input signal, the ACK signal stops being produced.
(2) When the circuit is set to the target, the pulse count of the REQ output signal is compared with the pulse count of the ACK input signal plus an offset value, and when the pulse count of the ACK input signal plus the offset value is larger than the pulse count of the REQ output signal, the clock signal is produced as an REQ signal, and when the pulse count of the ACK input signal plus the offset value becomes equal to the pulse count of the REQ output signal, the REQ signal stops being produced.
(3) In the case of data transfer in asynchronous mode with the circuit set to the initiator, the ACK output signal for the last byte of the transfer data is held true, and when data transfer is decided in synchronous mode at the next phase, the ACK output signal is rendered false after completion of preparations for data transfer in synchronous mode, while data transfer in asynchronous mode is decided, on the other hand, the ACK output signal is immediately rendered false.
As a result of this operation, a data transfer control circuit satisfying the specification of synchronous transfer of SCSI is easily realized.

The invention will be described now by way of example only, with particular reference to the accompanying drawings. In the drawings:

Fig. 1 is a block diagram showing a circuit for controlling REQ and ACK signals at the time of data transfer in synchronous mode of SCSI according to first and second embodiments of the present invention.

Fig. 2 is a timing chart for explaining the operation of REQ signal control according to the first embodiment with the circuit set to the target in the block diagram of Fig. 1.

Fig. 3 is a timing chart for explaining the operation of ACK signal control according to the second embodiment with the circuit set to the initiator in the block diagram of Fig. 1.

Fig. 4 is a block diagram showing a circuit for stopping the phase change of the target with the circuit set to the initiator in the SCSI according to a third embodiment of the present invention.

Fig. 5 is a timing chart for explaining the operation in the block diagram of Fig. 4.

Fig. 6 is a timing chart of REQ and ACK signals for data transfer in asynchronous mode of SCSI according to the prior art.

Fig. 7 is a block diagram showing a circuit for controlling REQ and ACK signals for data transfer in asynchronous mode of SCSI according to the prior art.

Fig. 8 is a timing chart for explaining the operation of the conventional circuit shown in the block diagram of Fig. 7 as set to the target.

Fig. 9 is a timing chart for explaining the operation with the circuit set to the initiator in the conventional circuit shown in the block diagram of Fig. 7.

Fig. 10 is a timing chart of REQ and ACK signals for data transfer in synchronous mode of SCSI.

### DESCRIPTION OF THE PREFERRED EMBODIMENTS

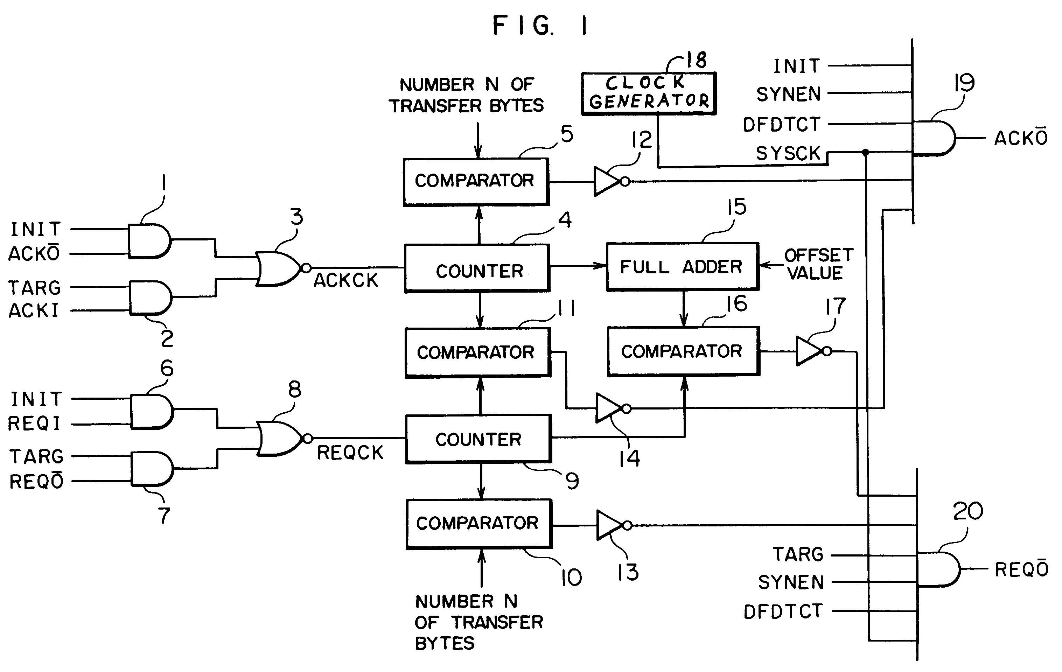

In Fig. 1, reference numeral 1 designates a two-input AND gate supplied with a signal INIT and an ACK output signal which become true when the circuit is set to the initiator, numeral 2 a two-input AND gate supplied with a signal TARG and an ACK input signal which becomes true when the circuit is set to the target, and numeral 3 a two-input NOR gate supplied with an output of the two-input AND gate 1 and an output of a two-input AND gate 2. Numeral 4 designates a counter for counting the number of pulses of the output signal ACKCK of the two-input NOR gate 3 at the trailing edge thereof, and numeral 5 a comparator for comparing the count of the ACKCK pulse counter 4 with the number N of transfer bytes and producing a true output when the two inputs are equal to each other. Numeral 6 designates a two-input AND gate supplied with a signal INIT and an REQ input signal REQ1, and numeral 7 a two-input AND gate supplied with a signal TARG and an REQ signal REQO. Numeral 8 designates a two-input NOR gate supplied with outputs from the two-input AND gates 6 and 7. Numeral 9 designates a counter for counting the pulses of the output signal REQCK of the two-input NOR gate 8 at the trailing edge thereof, and numeral 10 a comparator for comparing the output of the REQCK pulse counter 9 with the number N of transfer bytes and producing a true output when the two inputs are equal to each other. Numeral 11 designates a comparator for comparing the output of the ACK pulse counter 4 with that of the REQ pulse counter 9 and producing a true output when the two inputs thereto are equal to each other. Numeral 12 designates a reversing gate for inverting the output of the comparator 5, numeral 13 a reversing gate for inverting the output of the comparator 10, numeral 14 a reversing gate for inverting the output of the comparator 11, numeral 15 a full adder for producing the sum of the output of the ACKCK pulse counter 4 and a set offset value, and numeral 16 a comparator for comparing the output of the full adder 15 with that of the REQCK pulse counter 9 and producing a true output when the two inputs thereto are equal to each other. Numeral 17 designates a reversing gate for inverting the output of the comparator 16. The signal SYNEN (Synchronous Transfer Enable) is a signal which becomes true if the synchronous mode enable is involved in data phase; the signal DFDTCT (Data Phase Detected) is one which becomes true when the phase set by the target is data phase. Numeral 18 designates a clock generator which generates a signal SYSCK (System Clock). The signal SYSCK is a single clock having a duty cycle of approximately 50% and a frequency equal to the data transfer speed in synchronous mode. Numeral 19 designates a 6-input AND gate supplied with six signals including the output of the reversing gate 12, the output of the reversing gate 14, signals INIT, SYNEN, DFDTCT , and SYSCK, and producing an ACK output signal ACKO. Numeral 20 designates a 6-input AND gate supplied with six signals including the output of the reversing gate 13, the output of the reversing gate 17, signals TARG, SYNEN, DFDTCT and SYSCK and producing a REQ output signal REQO. The signal SYSCK is supplied to both the 6-input AND gate 19 and 20.

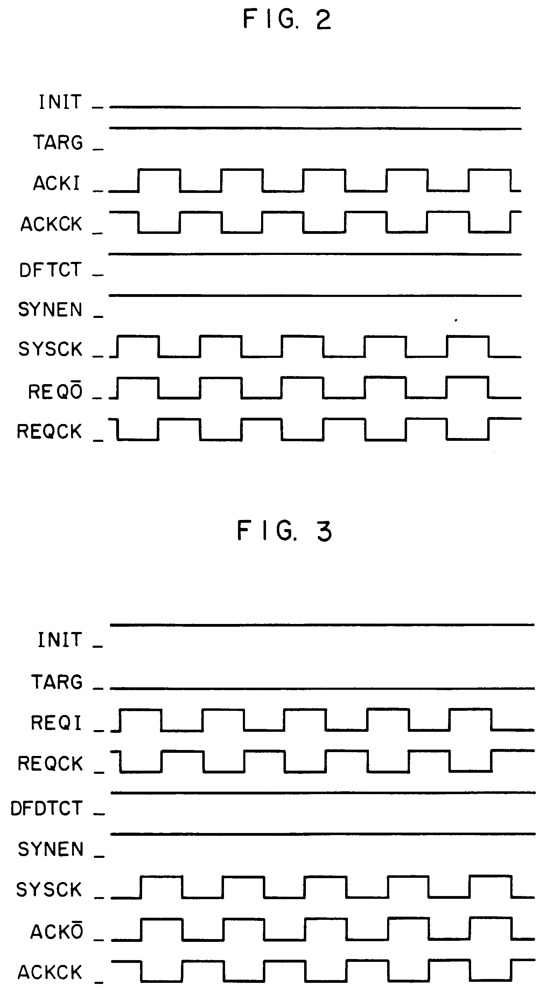

The operation of the circuit shown in the block diagram of Fig. 1 will be explained. First, explanation will be made about the case in which the circuit is set to the target with reference to the timing chart of Fig. 2. In this case, the signal INIT is false and the signal TARG true, the input ACKCK of the counter 4 is an inverted signal of the ACK input signal ACKI, and the input REQCK of the counter 9 is an inverted signal of the REQ output signal REQO. Since the signal INIT is false, the output ACKO of the 6-input AND gate 19 remains always false. The signal required to be controlled when the circuit is set to the target is an output REQO of the 6-input AND gate 20. At the time of data transfer in synchronous mode, the signal DFDTCT becomes true, so that if the number of pulses of the ACKI signal is smaller than the number N of transfer bytes and at the same time the number of pulses of the ACKI signal plus the offset value is larger than the number of pulses of the REQO signal, then both the outputs of the reversing gates 13 and 17 become true. Thus the signals TARG and SYNEN are also true, and therefore the REQO signal becomes equal to SYSCK. When the number of pulses of REQO signal becomes equal to the number N of transfer bytes or when the number of pulses of ACKI signal plus the offset value becomes equal to the number of pulses of the REQO signal, then the REQO signal becomes false.

Now, explanation will be made about the case in which the circuit is set to the initiator with reference to the timing chart of Fig. 3. In this case, the signal INIT becomes true, the signal TARG becomes flase, the input ACKCK of the counter 4 becomes an inverted signal of the ACK output signal ACKO, and the input REQCK of the counter 9 becomes an inverted signal of the REQ input signal REQI. Since the signal TARG is false, the output REQO of the input AND gate 20 remains always false. The signal required to be controlled when the circuit is set to the initiator is the output ACKO of the 6-input AND gate 19. At the time of data transfer in synchronous mode, the signal DFDTCT becomes true, so that when the number of pulses of the ACKO signal is smaller than the number N of transfer bytes and at the same time the number of pulses of the REQI signal is larger than that of the signal ACKO, then the outputs of both the reversing gates 12 and 14 become true as well as the signals INIT and SYNEN. Thus the ACKO signal becomes the same as SYSCK. The ACKO signal becomes false when the number of pulses of ACKO signal becomes equal to the number N of transfer bytes or when the number of pulses of the REQI signal becomes equal to that of the ACKO signal.

As described above, at the time of data transfer in synchronous mode, the number of pulses of the ACK signal is prevented from exceeding that of the pulses of REQ signal, while at the same time easily realizing the data transfer satisfying the offset specification.

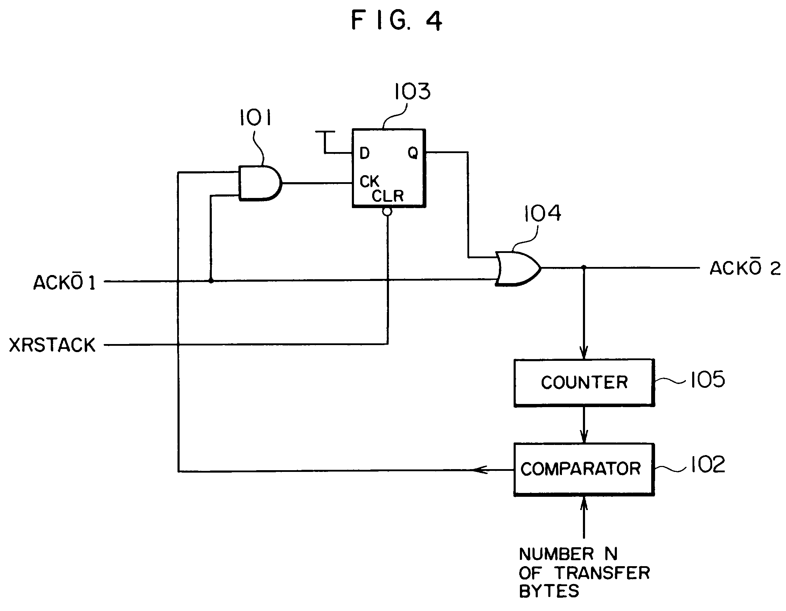

A block diagram representing a third embodiment of the present invention is shown in Fig. 4. In Fig. 4, the signal ACKO1 (Acknowledgement output 1) is one equivalent to the ACKO signal in Fig. 7 showing a conventional circuit. Numeral 101 designates a two-input AND gate supplied with an output of a comparator 102 and ACKO1, and numeral 102 a comparator for comparing the number of transfer bytes with the output of the counter 105. Numeral 103 designates a D-type flip-flop supplied with a true D input and a CK input (clock input) as an output from the two-input AND gate 101. Numeral 104 designates a two-input OR gate supplied the Q output of the D-type flip-flop 103 and ACKO1. The output of the two-input OR gate 104 is the ACKO2 (Acknowledgement output 2), which is used as an ACK output signal according to the present invention. Numeral 105 designates a counter for counting the number of pulses at the leading edge of the signal ACKO2.

The operation of the circuit shown in the block diagram of Fig. 4 will be explained. Reference is had to the timing chart of Fig. 5 for explaining the case in which the circuit is set to the initiator. A signal ACKO1 corresponding to the ACKO signal in Fig. 7 showing a conventional circuit is applied to the circuit of Fig. 4, which in turn produces the signal ACKO2. By executing the data transfer in asynchronous mode, the output of the counter 105 becomes N at the leading edge of the signal ACKO2 for data transfer of N-th byte, so that the output of the comparator 102 becomes true, and so does the output of the two-input AND gate 101, the output of the D-type flip-flop 103 and the ACKO2 output. The ACKO2 output is held in true form until a reset signal XRSTACK is applied to the D-type flip-flop 103. The SCSI specification prohibits the target phase from being switched as long as the initiator hold the ACK signal true, and therefore the initiator should makes preparations for the next phase while the ACKO2 remains true and then produce a reset signal XRSTACK (Reset Acknowledgement Signal) to reset the D-type flip-flop 103. As a result, a data retrieval failure is prevented which otherwise might be caused by an unsatisfactory preparation for data receiving of the initiator when data transfer begins from the target in the direction of the initiator with the data transfer mode of the target switched from asynchronous to synchronous mode.

## Claims

1. A data transfer control circuit for controlling the data transfer based on a data transfer control specification capable of data transfer in such a manner as to enable a data transfer request signal to lead a data transfer acknowledgement signal by a predetermined number of words, said data transfer control circuit comprising means (18) for generating a clock having a frequency equal to the data transfer speed, first counter means (9) for counting the pulses of the data transfer request signal, and second counter means (4) for counting the pulses of the data transfer acknowledgement signal, characterised by a full adder (15) for adding the count output of the second counter means to the predetermined number of words by which the data transfer request signal is capable of leading the data transfer acknowledgement signal, and output comparator means (16) for comparing the output of the full adder with the count output of the first counter means, the arrangement being such that when the output of the full adder is larger than the count output of the first counter means with the circuit set to the transmitting end of data transfer request signal, the output of the clock generator means is produced as a data transfer request signal, and when the output of the full adder becomes equal to the count output of the first counter means, the output of the clock generator means stops being produced as a data transfer request signal.

2. A data transfer control circuit according to claim 1, for controlling both a first transfer system for handshaking between a data transfer request signal and a data transfer acknowledgement signal and a second transfer system for enabling the data transfer request signal pulse to lead the data transfer acknowledgement signal pulse by a predetermined number of words, the circuit being so arranged that when data transfer is effected in the second transfer system with the circuit set to the transmitting end of the data transfer acknowledgement signal, the data transfer acknowledgement signal for the last byte of the transfer data is held true, and when the second transfer system is decided for the next data transfer after the present data transfer, preparation for the next data transfer is first completed and then the data transfer acknowledgement signal is rendered false.

## Patentansprüche

1. Datenübertragungssteuerungsschaltung zum Steuern der Datenübertragung auf Grundlage einer Datenübertragungssteuerungsspezifikation, mit der eine Datenübertragung so ausgeführt werden kann, daß ein Datenübertragungsanfragesignal einem Datenübertragungsbestätigungssignal um eine vorgegebene Anzahl von Worten vorauseilen kann, wobei die Datenübertragungssteuerungsschaltung aufweist: eine Einrichtung (18) zum Erzeugen eines Taktes mit einer der Datenübertragungsgeschwindigkeit entsprechenden Frequenz, eine erste Zählereinrichtung (9) zum Zählen der Impulse des Datenübertragungsanfragesignals und eine zweite Zählereinrichtung (4) zum Zählen der Impulse des Datenübertragungsbestätigungssignals, gekennzeichnet durch einen Volladdierer (15) zum Addieren der Zählwertausgabe der zweiten Zählereinrichtung zur vorgegebenen Anzahl von Worten, um die das Datenübertragungsanfragesignal dem Datenübertragungsbestätigungssignal vorauseilen kann, und eine Ausgangskomparatoreinrichtung (16) zum Vergleichen des Ausgangs des Volladdierers mit der Zählwertausgabe der ersten Zählereinrichtung, wobei die Anordnung so gewählt ist, daß dann, wenn der Ausgang des Volladdierers bei einer Einstellung der Schaltung auf das übertragende Ende des Datentübertragungsanfragesignals größer ist als die Zählwertausgabe der ersten Zählereinrichtung, der Ausgang der Takterzeugungseinrichtung als Datenübertragungsanfragesignal erzeugt wird, und wenn der Ausgang des Volladdierers dem Zählwertausgang der ersten Zählereinrichtung entspricht, die Erzeugung des Ausgangs der Takterzeugungseinrichtung als Datenübertragungsanfragesignal unterbrochen wird.

2. Datenübertragungssteuerungsschaltung nach Anspruch 1 zum Steuern von sowohl einem ersten Übertragungssystem zur Ausführung eines Handshakes zwischen einem Datenübertragungsanfragesignal und einem Datenübertragungsbestätigungssignal als auch einem zweiten Übertragungssystem, bei dem das Datenübertragungsanfragesignal dem Datenübertragungsbestätigungssignal um eine vorgegebene Anzahl von Worten vorauseilen kann, wobei die Schaltung so angeordnet ist, daß bei einer Einstellung der Schaltung auf das übertragende Ende des Datenübertragungsbestätigungssignals das Datenübertragungsbestätigungssignal für das letzte Byte der Übertragungsdaten bei eins gehalten wird, wenn die Datenübertragung im zweiten Übertragungssystem bewirkt wird, und wenn das zweite Übertragungssystem für die nächste Datenübertragung nach der gerade ausgeführten Datenübertragung bestimmt wird, die Vorbereitung für die nächste Datenübertragung zunächst beendet wird, und dann das Datenübertragungsbestätigungssignal auf Null gesetzt wird.

## Revendications

1. Circuit de commande de transfert de données destiné à commander le transfert de données sur la base d'une spécification de la commande de transfert de données, capable d'effectuer un transfert de données d'une manière telle qu'il autorise qu'un signal de demande de transfert de données précède un signal d'accusé de réception de demande de transfert de données d'un nombre prédéterminé de mots, ledit circuit de commande de transfert de données comportant des moyens (18) pour engendrer une horloge ayant une fréquence égale à la vitesse de transfert des données, des premiers moyens (9) formant compteur pour compter les impulsions du signal de demande de transfert de données, et des seconds moyens (4) formant compteur pour compter les impulsions du signal d'accusé de réception de demande de transfert de données, caractérisé en ce qu'il comporte un additionneur complet (15) destiné à additionner la sortie de comptage des seconds moyens formant compteur au nombre prédéterminé de mots dont le signal de demande de transfert de données peut précéder le signal d'accusé de réception de demande de transfert de données, et des moyens (16) formant comparateur de sorties destinés à comparer la sortie de l'additionneur complet à la sortie de comptage des premiers moyens formant compteur, l'agencement étant tel que lorsque la sortie de l'additionneur complet est plus grande que la sortie de comptage des premiers moyens formant compteur, le circuit étant activé à la fin de la transmission du signal de demande de transfert de données, la sortie des moyens formant générateur d'horloge est produite en tant que signal de demande de transfert de données, et, lorsque la sortie de l'additionneur complet devient égale à la sortie de comptage des premiers moyens formant compteur, la sortie des moyens formant générateur d'horloge cesse d'être produite en tant que signal de demande de transfert de données.

2. Circuit de commande de transfert de données selon la revendication 1, destiné à commander à la fois un premier système de transfert destiné à établir une liaison entre un signal de demande de transfert de données et un signal d'accusé de réception de demande de transfert de données et un second système de transfert destiné à autoriser que l'impulsion de signal de demande de transfert de données précède l'impulsion de signal d'accusé de réception de demande de transfert de données d'un nombre prédéterminé de mots, le circuit étant agencé de manière à ce que lorsqu'un transfert de données est effectué dans le second système de transfert, le circuit étant activé à la fin de la transmission du signal d'accusé de réception de demande de transfert de données, le signal d'accusé de réception de demande de transfert de données pour le dernier multiplet des données transférées est maintenu dans l'état logique vrai, et lorsque le second système de transfert est choisi pour le transfert de données suivant après le présent transfert de données, une préparation pour le transfert de données suivant est d'abord effectuée et, ensuite, le signal d'accusé de réception de demande de transfert de données est établi dans l'état logique faux.
